# EUROPÄISCHE PATENTSCHRIFT

(11) **EP 0 802 379 B1**
(45) Veröffentlichungstag und Bekanntmachung des Hinweises auf die Patenterteilung: **08.08.2001**
(21) Anmeldenummer: 96119131.9
(22) Anmeldetag: 29.11.1996
(51) Int. Cl.: F24H 9/06, F16M 5/00

(54) **Bausatz für insbesondere Heizkesselsockel**
Assembly for a base for a heater
Ensemble pour un socle pour une chaudière

(30) Priorität: 17.04.1996 DE 19615043
(43) Veröffentlichungstag der Anmeldung: 22.10.1997
(73) Patentinhaber: VIESSMANN WERKE GmbH & CO., 35107 Allendorf/Eder (DE)
(72) Erfinder: Schneider, Gerhard, 35108 Allendorf (DE)
(74) Vertreter: Wolf, Günter, Dipl.-Ing.

(56) Entgegenhaltungen:
- DE-U- 8 215 796
- US-A- 5 308 037

## Beschreibung

Die Erfindung betrifft einen Bausatz für insbesondere Heizkesseisockel, der aus vier flachkastenförmigen Sockelwänden gebildet ist, die in ihren Eckbereichen mit abgekröpften, aneinanderlegbaren Vertikalrändern verbindbar und zu einem Tragrahmen zusammenfügbar sind, und der oben in seinen Eckbereichen Löcher für den Eingriff von Heizkesselverschraubungen aufweist.

Derartige Sockel, die vorallem für die Aufstellung von Klein- und Mittelheizkesseln in Frage kommen, aber gegf. auch für andere wärmetechnische Geräte, bspw. Speicher oder dgl., sind bspw. nach dem DE-U-82 15 796 bekannt. Diese Sockel dienen dazu, den betreffenden Heizkessel in Bezug auf Bedienbarkeit und Kaminanschluß günstig zu positionieren. Soweit bekannt, wurden diese Sockel bisher in ihren Abmessungen auf die jeweilig spezielle Geräte- bzw. Heizkesselgröße abgestellt, was nicht nur eine aufwendige Fertigung verlangt, sondern auch eine entsprechend aufwendige und Kosten verursachende Disposition, Lagerung und Verwaltung. Stellt ein Heizkesselhersteller bspw. zehn bis fünfzehn verschiedene Heizkesselgrößen und -typen her, so muß dieser auch für eine entsprechende Anzahl unterschiedlicher Sockelgrößen sorgen. Damit solche Sockel aus Lagerungs-, Verpackungs- und Transportgründen wenig Raum beanspruchen, müssen diese außerdem demontiert gelagert, verpackt, transportiert und vor Ort vom Installateur zusammengeschraubt werden. Dies verlangt nicht nur den Beipack von Schrauben und gegf. Verschraubungssicherungen, sondern auch einen beträchtlichen Zeitaufwand, zumal die Schrauben von innen an den nach innen abgekröpften Rändern der Sockelwände angesetzt werden müssen, damit diese nicht außen am Sockel in Erscheinung treten.

Hier Abhilfe zu schaffen, liegt der Erfindung als Aufgabe zugrunde, d.h., Heizkesselsockel der eingangs genannten Art sollen dahingehend verbessert werden, daß statt typen- bzw. größenspezifischer Sockel ein Bausatz für Heizkesselsockel zur Verfügung steht, der geeignet ist, als Tragrahmen für eine ganze Reihe von Heizkesseln verwendet zu werden, verbunden mit der Maßgabe, daß die den Sockel bildenden Elemente ohne beizupackendes Hilfszubehör stabil zu einem Tragrahmen zusammenfügbar sind.

Diese Aufgabe ist mit einem Bausatz der eingangs erwähnten Art nach der Erfindung dadurch gelöst, daß die beiden sich im Tragrahmen parallel gegenüberstehenden Sockelwände jeweils aus zwei ineinanderfügbaren und zueinander verstellbaren, in unterschiedlichen Auszugsstellungen miteinander verrast- und fixierbaren Wandteilen gebildet sind, wobei die abgekröpften Vertikalränder der beiden verstellbaren Wandteile mit vertikal nach unten orientierten Einsteckzungen für den Eingriff in an den abgekröpften Vertikalrändern der beiden anderen Sockelwände angeordneten Eingriffsöffnungen versehen und wobei die Vertikalränder der Wandteile und der beiden anderen Sockelwände ebenfalls miteinander verrast- und fixierbar sind.

Wesentlich für diese erfindungsgemäße Ausbildung des Bausatzes sind also nicht nur die auf unterschiedliche Längen einstellbaren Wandteile, sondern, und dies ist für die Stabilität des ohne Verschraubungen zusammenfügbaren Tragrahmens besonders wichtig, daß die jeweils zwei der Sockelwände bildenden einstellbaren Wandteile zueinander nicht nur verrastbar sondern auch zueinander in der erforderlichen Position stabil fixierbar sind, was für die Verbindung zwischen den verstellbaren und den beiden anderen Sockelwänden ebenfalls wichtig ist. Die Verstell- und Verrastbarkeit der Wandteile erfolgt in einem vorgegebenen Distanzraster, und zwar in Anpassung an die Größen einer Heizkesselreihe, so daß mit einem solchen Bausatz mehrere Heizkessel erfaßt werden können.

Für die Verstell- und Fixierbarkeit sind bevorzugt, was noch näher erläutert wird, an den abgekröpften Rändern der Sockelwände Abkröpfzungen und Einkröpfausnehmungen vorgesehen, die vorteilhaft beim Stanzzuschnitt der Wandbleche einfach mit ausgestanzt werden.

Die Verstellbarkeit des Sockels bzw. Tragrahmens hat natürlich aus Stabilitätsgründen ihre Grenzen, d.h., mit einem solchen Bausatz sollen nicht Extremgrößen erfaßt werden können, sondern, wenn vergleichsweise bisher fünfzehn unterschiedliche Sockelgrößen erstellt werden mußten, so soll dieses Erfordernis auf bspw. nur drei Bausätze reduziert sein, mit denen jeweils die kleineren, die mittleren und die größeren Heizkessel einer Baureihe erfaßbar sind.

Vorteilhafte Weiterbildungen bestehen im Folgendem:

Um die Verschraubung des Sockels mit dem zugehörigen Heizkessel bereits in der entgültigen Position zu ermöglichen, sind unterhalb der Löcher für die Heizkesselverschraubungen in den vertikalen Seitenflanken der nicht verstellbaren Sockelwände Eingriffsöffnungen vorgesehen, die von außen einen seitlichen Zugang zu den Heizkesselverschraubungen ermöglichen. Der Heizkessel kann also unmittelbar nach dem Aufsetzen auf den Sockel mit diesem verschraubt werden, ohne daß, wie bisher üblich und notwendig, Heizkessel und Sockel in gekippter Stellung zusammenmontiert werden müssen.

Vorteilhaft sind ferner die oben erwähnten Eingriffsöffnungen mit abscherbaren Stabilisierungsstegen versehen, um die Gefahr einer unerwünschten Verbiegung der Bleche über den seitlichen Eingriffsöffnungen bei gegf. nicht sachgemäßem Aufsetzen des Heizkessel durch die nach unten gerichteten am Heizkesselgehäuse befindlichen Verschraubungen auszuschließen. Ist der Heizkessel ordnungsgemäß auf dem Sockel plaziert, werden diese Stege zum Anziehen der Heizkesselverschraubung entfernt.

Zum Abscheren bzw. Abdrehen (wird noch näher erläutert) der Stabilisierungsstege aber auch zum Umbiegen der zuvorerwähnten Abkröpfzungen ist lediglich ein Hilfswerkzeug mit einer der Blechstärke der Sockelwände entsprechend schmalen Nut erforderlich. Um weiterhin, wie oben erwähnt, auf Beipacks verzichten zu können, ist vorteilhaft vorgesehen, dieses Hilfswerkzeug vierfach, aber auch andere Zubehörteile in den horizontalen, im aufgestellten Zustand und bei aufgesetztem Heizkessel nicht sichtbaren Randflächen der nicht verstellbaren Sockelwände vorgestanzt und ebenfalls leicht abscher- bzw. ausdrehbar anzuordnen, wobei diese vier Hilfswerkzeuge gleichzeitig die vier Unterlegscheiben für die Heizkesselverschraubung bilden.

Vorteilhaft gehört zum Bausatz auch eine Steckschablonenleiste, vorzugsweise aus Kartonage, die einerseits mit den in ihrem einen Längsrand angeordneten Einstecknuten als Lehre zur Festlegung der Auszugsstellungen der zueinander verstellbaren Sockelwände für die verschiedenen Heizkesseltypen und andererseits nach Einschub der an ihrem anderen Längsrand angeordneten Einsteckfortsätzen in die Eingriffsöffnungen mit ihren Verlängerungen zur erleichterten Positionierung der Heizkessels auf dem Heizkesselsockel dient.

Der erfindungsgemäße Bausatz wird nachfolgend an Hand der zeichnerischen Darstellung von Ausführungsbeispielen näher erläutert.

Es zeigt
- Fig. 1: eine Draufsicht auf den Sockel;
- Fig. 2: den Sockel gemäß Fig. 1 in Seitenansicht (Pfeilrichtung A);
- Fig. 3: den Sockel gemäß Fig. 1 in Seitenansicht (Pfeilrichtung B);
- Fig. 4-9: die zueinander verstellbaren und ineinanderfügbaren Wandteile;
- Fig. 10: in Seitenansicht eine bauliche Einzelheit
- Fig. 11: den Stanzzuschnitt für die beiden anderen Sockelwände;
- Fig. 12: die aus dem Stanzzuschnitt gemäß Fig. 11 gebildeten Sockelwände in Seitenansicht;
- Fig. 13: eine der Sockelwände gemäß Fig. 12 in Draufsicht;
- Fig. 14: die zum Bausatz gehörende Steckschablonenleiste und
- Fig. 15: einen Schnitt durch eine mit dem Sockel verschraubte Heizkesselecke.

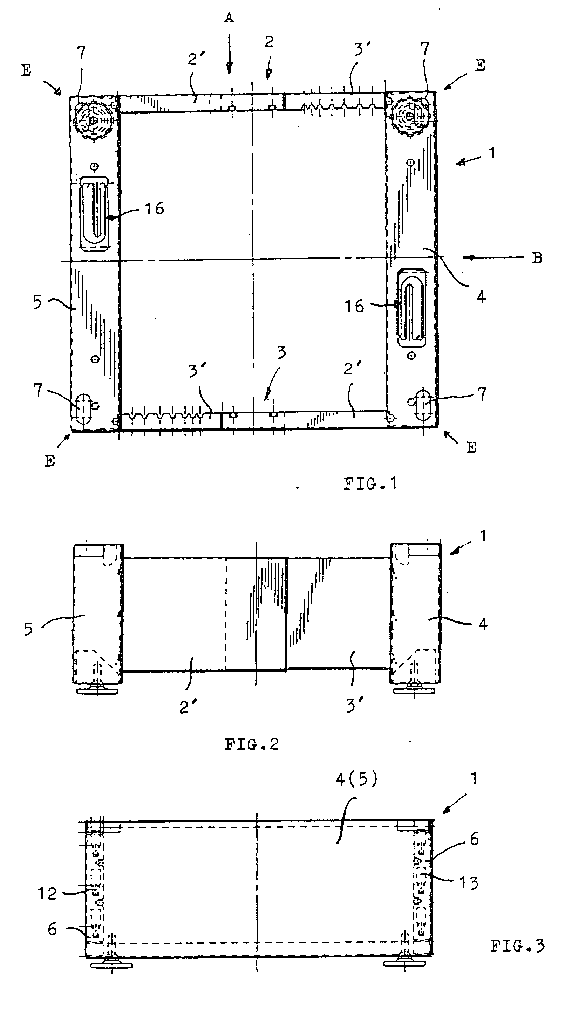

Der den Sockel bildende Tragrahmen besteht gemäß Fig. 1, wie bisher auch schon, aus vier flachkastenförmigen Sockelwänden 2-5, die in ihren Eckbereichen E mit abgekröpften, aneinanderlegbaren Vertikalrändern 6, 6' verbindbar und zu einem Tragrahmen 1 zusammenfügbar sind, der oben in seinen Eckbereichen E Löcher 7 für den Eingriff von Heizkesselverschraubungen 8 aufweist (siehe Fig. 15).

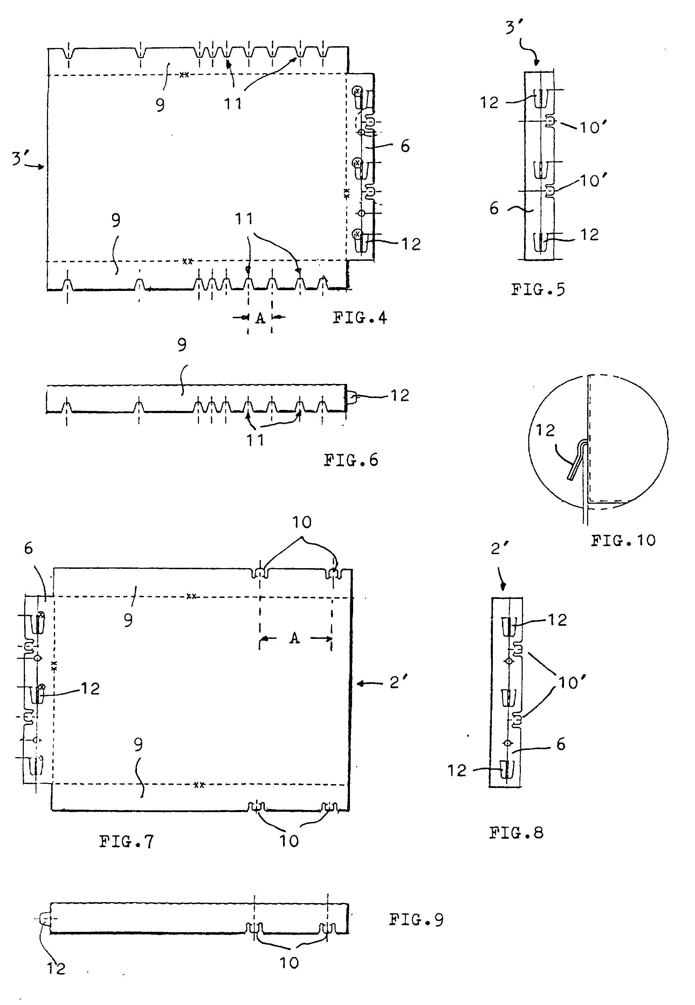

Für einen solchen Bausatz ist nun wesentlich, daß die beiden sich im Tragrahmen 1 parallel gegenüberstehenden Sockelwände 2, 3 jeweils aus zwei ineinanderfügbaren und zueinander verstellbaren, in unterschiedlichen Auszugsstellungen miteinander verrast- und fixierbaren Wandteilen 2', 3' gebildet sind. Hierfür weisen die Wandteile 2', 3', um ein Ineinanderschieben für die unterschiedlichen Auszugstellungen zu ermöglichen, jeweils an einer ihrer Schmalseiten keinen Abkröpfungbereich auf (siehe Fig. 4 und Fig. 7). Aus Fig. 6 und Fig. 9 ist erkennbar, daß bei der Montage der für den jeweiligen Heizkessel erforderliche Abstand zwischen den Sockelwänden 4, 5 mit Hilfe der Abkröpfzungen 10 am Wandteil 2' und der Einkröpfausnehmungen 11 am Wandteil 3' fixiert wird. Nach dem Umbiegen der Abkröpfzungen 10 der Wandteile 2' in die Einkröpfausnehmungen 11 des Wandteiles 3' bilden die Wandteile 2', 3' eine starre, nicht mehr verstellbare Einheit. Die Abkröpfungen der Ränder 9 sind dabei so getroffen, daß die Wandteile 2', 3' ineinanderpassen.

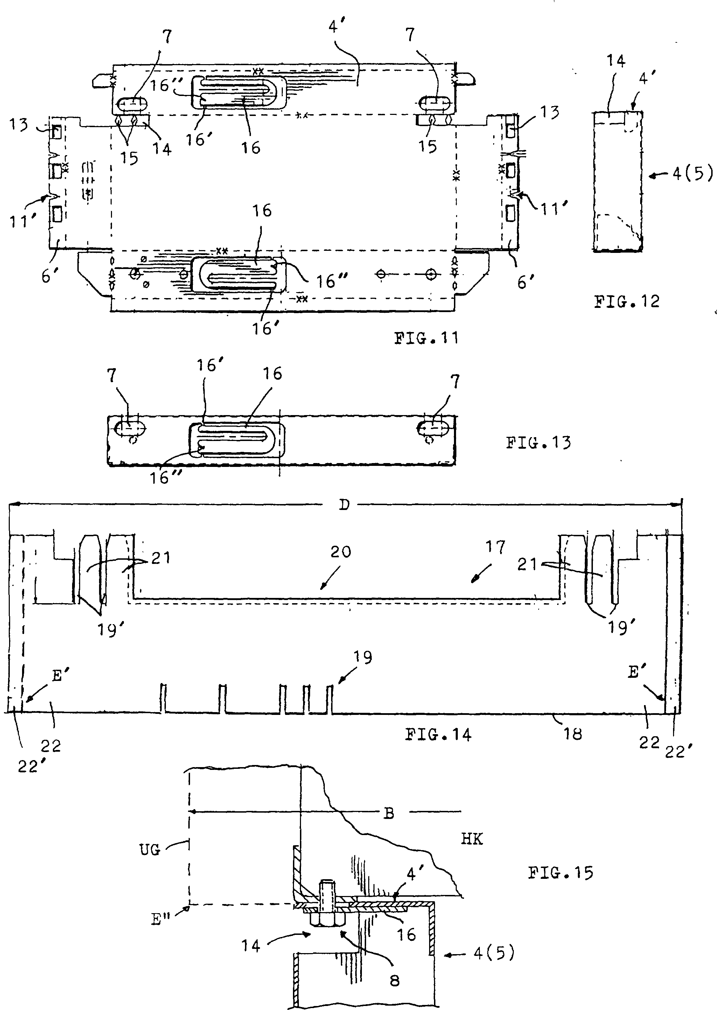

Die abgekröpften Vertikalränder 6 (siehe Fig. 5, 8) der beiden Wandteile 2', 3' sind mit vertikal nach unten orientierten Einsteckzungen 12 (Fig. 10) für den Eingriff in an den abgekröpften Vertikalrändern der beiden anderen Sockelwände 4, 5 angeordneten Eingriffsöffnungen 13 (Fig. 11) versehen. Nach dem Einstecken der Einsteckzungen 12 in diese Eingriffsöffnungen 13 werden die Abkröpfzungen 10' der verstellbaren Wandteile 2', 3' in die dazu fluchtenden Einkröpfausnehmungen 11' der Sockelwände 4, 5 eingebogen, womit der in sich absolut stabile Tragrahmen gemäß Fig. 1 bis 3 erstellt ist.

In den oberen Eckbereichen E der Sockelwände 4, 5, d.h. in deren oberen abgekröpften Rändern 4', sind Löcher 7 für den Eingriff von Heizkesselverschraubungen 8 vorgesehen. Aus Fig. 11, 12 ist außerdem ersichtlich, daß die Heizkesselverschraubungen 8 durch darunter in den Sockelwänden 4, 5 angeordneten Eingriffsöffnungen 14 von der Seite her zugänglich sind. Der Heizkessel kann also unmittelbar nach dem Aufsetzen auf den Sockel mit diesem verschraubt werden, ohne daß, wie bisher üblich und notwendig, Heizkessel und Sockel in gekippter Stellung zusammenmontiert werden müssen.

Aus den einleitend vorerwähnten Gründen sind die Eingriffsöffnungen 14 mit abscherbaren Stabilisierungsstegen 15 mit der bspw. dargestellten Form versehen, die nach Aufsatz des Heizkessels einfach durch Verdrehen abgeschert werden, um die Eingriffsöffnungen 14 frei zugänglich zu machen.

Zum Entfernen der Stabilisierungsstege 15, aber auch zum Umbiegen der Abkröpfzungen 10, 10' in die Einkröpfausnehmungen 11, 11' sind, wie in Fig. 11-13 dargestellt, als Hilfswerkzeuge leicht abdrehbare und nur von kleinen Verbindungsstegen 16' gehaltene Blechzuschnitte 16 in den horizontalen Ränder 4' der Sockelwände 4, 5 vorgestanzt angeordnet. Diese Blechzuschnitte 16 bilden vorteilhaft aufgrund ihrer dargestellten, speziellen Zuschnittsform gleichzeitig auch Unterlegscheiben für die Heizkesselverschraubung 8 und weisen außerdem, wie dargestellt, kleine, schräggestellte Nuten 16'' für die Erfassung der Stabilisierungsstege 15 und auch der Abkröpfzungen 10, 10' auf.

Die in Fig. 14 dar- und vorzugsweise aus Kartonage hergestellte und ebenfalls zum Bausatz gehörende Steckschablonenleiste 17 dient einerseits mit dem in ihrem Längsrand 18 angeordneten Einstecknuten 19 als Lehre zur Festlegung der Auszugsstellung der Sockelwände für die verschiedenen Heizkesselgrößen und andererseits nach Einschub ihrer auf der anderen Seite angeordneten Einsteckfortsätze 21 in die Eingriffsöffnungen 14 mit ihren Verlängerungen 22 in Bezug auf die Löcher 7 zur zielgenauen Positionierung des Heizkessels auf dem Heizkesselsockel.

Zur Einstellung der Auszugsstellung werden dabei zunächst die Wandteile 2', 3' parallel zur Steckschablonenleiste 17 ineinander geschoben bis die richtige Länge der Seitenwände 2 (3) für die betreffende Heizkesselgröße gegeben ist. Da die Einstecknuten 19 eine Breite haben, die der für den Sockel verwendeten Blechstärke entspricht, kann die Steckschablonenleiste auf die Vertikalränder 6 der Wandteile 2', 3' aufgesteckt werden, was eine absolut genaue Längeneinstellung der Sockelwände 2, 3 gewährleistet. An den im vorgegebenen Raster angeordneten Einstecknuten 19 sind dabei die betreffenden Kesseltypen bzw. Kesselleistungsgrößen angegeben. Anschließend werden dann, wie vorerwähnt, die Abkröpfzungen 10 des Wandteiles 2' in die dazu nun genau fluchtend liegenden und entsprechend gerastert angeordneten Einkröpfausnehmungen 11 des Wandteiles 3' hineingebogen. Nach Zusammenfügen des Heizkesselsockels kann im folgenden der Heizkessel aufgesetzt werden, wofür ebenfalls die Steckschablonenleiste 17 benutzt wird. Zu berücksichtigen ist dabei, daß Heizkessel HK in der Regel fertig montiert zusammen mit ihrem äußeren Umschließungsgehäuse UG (siehe Fig. 15) angeliefert werden, die in Bezug auf den eigentlichen Heizkessel HK, wie dargestellt, einen Überstand haben, so daß beim Aufsetzen des Heizkessels HK dessen vier Verschraubungen 8, die ja gezielt in die Öffnungen 7 der Sockelwände 4, 5 eingesetzt werden müssen, nicht mehr eingesehen werden können. Genau dafür dienen die gemäß Fig. 14 neben den Einsteckfortsätzen 21 an der Steckschablonenleiste 17 angeordneten Verlängerungen 22, d.h., die beiden Endränder 22' entsprechen in ihrer Distanz D der Breite B des Umschließungsgehäuses UG und bilden damit eine Orientierungshilfe für das Aufsetzen des Heizkessels, wobei die Einsteckfortsätze 21 bzw. die diese begrenzenden Nuten 19' so bemessen sind, daß die Ecken E' der Steckschablone 17 der korrekten Stellung der unteren Ecken E'' des Umschließungsgehäuses UG entsprechen.

Es ist darauf hinzuweisen, daß für die Herstellung der Sockelwände nur drei unterschiedliche Stanzwerkzeuge erforderlich sind, und zwar eines für die beiden identischen Sockelwände 4, 5 und je eines für die Wandteile 2', 3', die am Sockel (siehe Fig. 1) ebenfalls zweifach vorhanden sind.

## Patentansprüche

1. Bausatz für insbesondere Heizkesselsockel, der aus vier flachkastenförmigen Sockelwänden (2-5) gebildet ist, die in ihren Eckbereichen (E) mit abgekröpften, aneinanderlegbaren Vertikalrändern (6, 6') verbindbar und zu einem Tragrahmen (1) zusammenfügbar sind, und der oben in seinen Eckbereichen (E) Löcher (7) für den Eingriff von Heizkesselverschraubungen (8) aufweist,
**dadurch gekennzeichnet,**
daß die beiden sich im Tragrahmen (1) parallel gegenüberstehenden Sockelwände (2, 3) jeweils aus zwei ineinanderfügbaren und zueinander verstellbaren, in unterschiedlichen Auszugsstellungen miteinander verrast- und fixierbaren Wandteilen (2', 3') gebildet sind,
daß die abgekröpften Vertikalränder (6) der beiden Wandteile (2', 3') mit vertikal nach unten orientierten Einsteckzungen (12) für den Eingriff in an den abgekröpften Vertikalrändern (6') der beiden anderen Sockelwände (4, 5) angeordnete Eingriffsöffnungen (13) versehen sind und
daß die Vertikalränder (6, 6') der Wandteile (2', 3') und der beiden anderen Sockelwände (4, 5) miteinander verrast- und fixierbar sind.

2. Bausatz nach Anspruch 1,
**dadurch gekennzeichnet,**
daß die Wandteile (2', 3') an ihren abgekröpften Längsrändern (9) mit mehreren, in bestimmten Abständen (A) angeordneten Abkröpfzungen (10) und Einkröpfausnehmungen (11) zur Festlegung unterschiedlicher Auszugsstellungen der Wandteile (2', 3') versehen sind.

3. Bausatz nach Abspruch 1 oder 2
**dadurch gekennzeichnet,**
daß die Vertikalränder (6, 6') der Wände (2', 3') und der Sockelwände (4, 5) mit zueinander fluchtenden Abkröpfzungen (10') und Einkröpfausnehmungen (11') versehen sind.

4. Bausatz nach einem der Anspruche 1 bis 3,
**dadurch gekennzeichnet,**
daß die vertikalen Seitenflanken der Sockelwände (4, 5) in den Eckbereichen (E) unterhalb der Löcher (7) mit Eingriffsöffnungen (14) versehen sind.

5. Bausatz nach Anspruch 4,
**dadurch gekennzeichnet,**
daß in den Eingriffsöffnungen (14) abscherbare Stabilisierungsstege (15) angeordnet sind.

6. Bausatz nach einem der Ansprüche 1 bis 5,
**dadurch gekennzeichnet,**
daß in den horizontalen Randflächen (4') der Sockelwände (4, 5) abscherbare, gleichzeitig Hilfswerkzeuge und Zubehörteile bildende Blechzuschnitte (16) vorgestanzt angeordnet sind.

7. Bausatz nach Anspruch 1,
**dadurch gekennzeichnet,**
daß der Bausatz eine Steckschablonenleiste (17) umfaßt, die an einem Längsrand (18) mit vorgegebenen Rasterabstand mit Einstecknuten (19) und am anderen Längsrand (20) mit Einsteckfortsätzen (21) für die Eingriffsöffnungen (14) versehen ist und die beidseitig neben den Einsteckfortsätzen (21) Verlängerungen (22) aufweist.

8. Bausatz nach Anspruch 7,
**dadurch gekennzeichnet,**
daß die Steckschablonenleiste (17) aus Kartonagenmaterial gebildet ist.

## Claims

1. A kit, in particular, for boiler pedestals, which is formed of four flat box-type pedestal walls (2-5) that with corner areas (E) thereof are adapted to be connected to cranked vertical edges (6, 6') in abutting relationship and to be joined together to form a support frame (1), and which, in the top corner areas (E) thereof, is provided with holes (7) to be engaged by boiler screws (8),
characterized in
that the two pedestal walls (2,3) oppositely disposed in parallel within the support frame (1) are respectively formed of two wall sections (2', 3') adapted to be nested and being adjustable with respect to one another and in different extended positions being lockable and fixable with respect to one another,
that the cranked vertical edges (6) of the two wall sections (2, 3') are provided with vertically downwardly oriented plug-in tongues (12) for engagement with holes (13) provided on the cranked vertical edges (6') of the two other pedestal walls (4,5), and
that the vertical edges (6,6') of the wall sections (2', 3') and of the two other pedestal walls (4,5) are lockable and fixable with respect to one another.

2. A kit according to claim 1,
characterized in that the wall sections (2', 3'), at the cranked longitudinal edges (9) are provided with a plurality of cranked tongues (10) and crank recesses (11) disposed at predetermined spaces (A) to lock varying extended positions of the wall sections (2', 3').

3. A kit according to claims 1 or 2,
characterized in
that the vertical edges (6, 6') of the walls (2', 3') and of the pedestal walls (4, 5) are provided with crank tongues (10') and crank recesses (11') disposed in registry.

4. A kit according to any one of claims 1 through 3,
characterized in
that the vertical side flanks of the pedestal walls (4, 5), in the corner areas (E) underneath the holes (7), are provided with engagement holes (14).

5. A kit set according to claim 4,
characterized in
that shearing stabilizing bridges (15) are provided in the engagement holes (14).

6. A kit according to any one of claims 1 through 5,
characterized in
that pre-stamped shearable sheet metal blanks (16) at the same time forming auxiliary tools and accessories are arranged in the horizontal marginal faces (4') of the pedestal walls (4,5).

7. A kit according to claim 1,
characterized in
that the kit comprises a plug-in pattern strip (17) which on one of the longitudinal edges (18), at a predetermined vertical space, is provided with plug-in grooves (19) and, on the other longitudinal edge (20) includes plug-in extensions (21) for engagement holes (14) and which, on both sides, is provided with extensions (22) in side-by-side relationship with the plug-in extensions (21).

8. A kit according to claim 7,
characterized in
that the plug-in pattern strip (17) is formed of cardboard material.

## Revendications

1. Kit en particulier pour socle de chaudière de chauffage qui est formé par quatre parois de socle en forme de caisse plate (2-5) qui peuvent être reliées dans leurs zones d'angle (E) avec des bords verticaux (6, 6') recourbés pouvant être posés bout à bout et qui peuvent être assemblées en un cadre porteur (1) et qui présente en haut dans ses zones d'angle (E) des trous (7) pour l'engrènement de vissages de chaudières de chauffage (8),
caractérisé en ce
que les deux parois de socle (2, 3) opposées parallèlement dans le cadre porteur (1) sont formées respectivement par deux parties de paroi (2', 3') pouvant être assemblées l'une dans l'autre et réglables l'une par rapport à l'autre, pouvant être enclenchées et fixées l'une à l'autre dans différentes positions de rallonge,
que les bords verticaux recourbés (6) des deux parties de paroi (2', 3') sont pourvus de languettes à emboîter (12) orientées verticalement vers le bas pour l'engrènement dans des ouvertures d'engrènement (13) placées sur les bords verticaux recourbés (6') des deux autres parois de socle (4, 5) et
que les bords verticaux (6, 6') des parties de paroi (2', 3') et des deux autres parois de socle (4, 5) peuvent être également enclenchés et fixés l'un à l'autre.

2. Kit selon la revendication 1,
caractérisé en ce
que les parties de paroi (2', 3') sont pourvues, sur leurs bords longitudinaux recourbés (9), de plusieurs languettes de recourbement (10) placées à certains écarts (A) et de creux d'accrochage (11) pour déterminer plusieurs positions de rallonge des parties de paroi (2', 3').

3. Kit selon la revendication 1 ou 2,
caractérisé en ce
que les bords verticaux (6, 6') des parois (2', 3') et des parois de socle (4, 5) sont pourvus de languettes de recourbement (10') et de creux d'accrochage (11') alignés les uns sur les autres.

4. Kit selon l'une des revendications 1 à 3,
caractérisé en ce
que les flancs latéraux verticaux des parois de socle (4, 5) sont pourvus d'ouvertures d'engrènement (14) dans les zones d'angle (E) au-dessous des trous (7).

5. Kit selon la revendication 4,
caractérisé en ce
que des barrettes de stabilisation (15) pouvant être cisaillées sont placées dans les ouvertures d'engrènement (14).

6. Kit selon l'une des revendications 1 à 5,
caractérisé en ce
que des découpes de tôle (16) qui peuvent être cisaillées, qui forment simultanément des outils auxiliaires et des accessoires, sont placées prédécoupées dans les surfaces de bord horizontales (4') des parois de socle (4, 5).

7. Kit selon la revendication 1,
caractérisé en ce
que le kit comprend une baguette de gabarit à emboîter (17) qui est pourvue, sur un bord longitudinal (18), à un écart de grille prédéterminé, de rainures à emboîter (19) et, sur l'autre bord longitudinal (20), de prolongements à emboîter (21) pour les ouvertures d'engrènement (14) et qui présente des prolongements (22) des deux côtés près des prolongements à emboîter (21).

8. Kit selon la revendication 7,
caractérisé en ce
que la baguette de gabarit à emboîter (17) est formée en matière cartonnée.
